Europäisches Patentamt

European Patent Office

Office européen des brevets

(19)

(11) Numéro de publication: **0 362 062**
**A1**

(12) ## DEMANDE DE BREVET EUROPEEN

(21) Numéro de dépôt: 89402658.2

(22) Date de dépôt: 27.09.89

(51) Int. Cl.5: **B62D 55/30 , B62D 55/116 , B62D 49/08**

(30) Priorité: 27.09.88 FR 8812610

(43) Date de publication de la demande:
04.04.90 Bulletin 90/14

(84) Etats contractants désignés:
**AT BE DE ES GB IT SE**

(71) Demandeur: **ASSOCIATION POUR LA RATIONALISATION ET LA MECANISATION DE L'EXPLOITATION FORESTIERE A.R.M.E.F.**
**164, Boulevard Haussmann**
**F-75008 Paris(FR)**

(72) Inventeur: **Gillet, Claude**
**9, rue de la Gare**
**F-45210 Ferrieres(FR)**

(74) Mandataire: **Nony, Michel et al**
**Cabinet NONY & CIE, 29, rue Cambacérès**
**F-75008 Paris(FR)**

(54) **Engin automoteur à train chenillé souple.**

(57) L'invention est relative à un engin automoteur à chenilles souples maintenues en position par des roues de guidage (5-8).

Les deux roues de guidage de chaque extrémité sont montées sur un balancier (16-24) dont l'axe d'oscillation (17,25) est différent des axes de rotation des roues qu'il porte, et au moins l'un de ces deux balanciers est muni d'un dispositif (18-23) susceptible de s'opposer à son mouvement d'oscillation.

EP 0 362 062 A1

## Engin automoteur à train chenillé souple

La présente invention concerne un engin automoteur à train chenillé souple, destiné entre autres à l'exploitation forestière.

On connaît divers engins automoteurs à chenilles notamment dans les travaux publics où ils sont utilisés pour porter et commander des outils comme pelles, chargeurs ou tabliers pousseurs.

Le principal inconvénient de tels engins est qu'ils sont équipés de trains chenillés rigides si bien qu'ils ne peuvent pratiquement circuler que sur terrains relativement plats, voire carrossables.

Il existe aussi des engins chenillés automoteurs utilisés en exploitation forestière. Mais la plupart de ces engins sont également à trains chenillés rigides, ce qui interdit de les utiliser sur terrains accidentés tels que terrains en friches avec roches ou souches dépassant le sol.

Quant aux engins chenillés équipés de trains chenillés souples et utilisés en exploitation forestière, s'ils peuvent circuler sur terrain accidenté, il n'en est plus de même en pente longitudinale ni, à fortiori, en dévers.

Il existe bien enfin, des engins chenillés militaires pouvant circuler sur terrain accidenté même en pente longitudinale importante ou en dévers. Mais ils ne sont pas conçus pour limiter les dégats éventuels sur le sol.

La présente invention a pour but de proposer un engin automoteur, à trains chenillé souple, utilisable sur tout terrain même en pente importante longitudinale et/ou en dévers, tout en respectant le sol à son passage.

Un tel engin comporte deux chenilles maintenues par des roues de guidage dont les deux de chaque extrémité sont montées sur un balancier dont l'axe d'oscillation est différent des axes de rotation des roues qu'il porte, l'un au moins de ces deux balanciers étant muni d'un dispositif susceptible de s'opposer à son mouvement d'oscillation de manière à adapter les conditions de fonctionnement des chenilles aux contraintes qu'elles subissent.

Suivant une deuxième caractéristique de l'invention, le dispositif susceptible de s'opposer au mouvement d'oscillation de l'un des balanciers d'extrémité est commandé par un inclinomètre mesurant l'inclinaison de l'engin, de manière à tenir compte des contraintes particulières dues à cette inclinaison.

Suivant une troisième caractéristique de l'invention, le débattement angulaire des balanciers est limité.

Suivant une quatrième caractéristique de l'invention, l'engin possède deux systèmes pour assurer des tensions différentes des chenilles suivant qu'il est en marche avant ou en marche arrière.

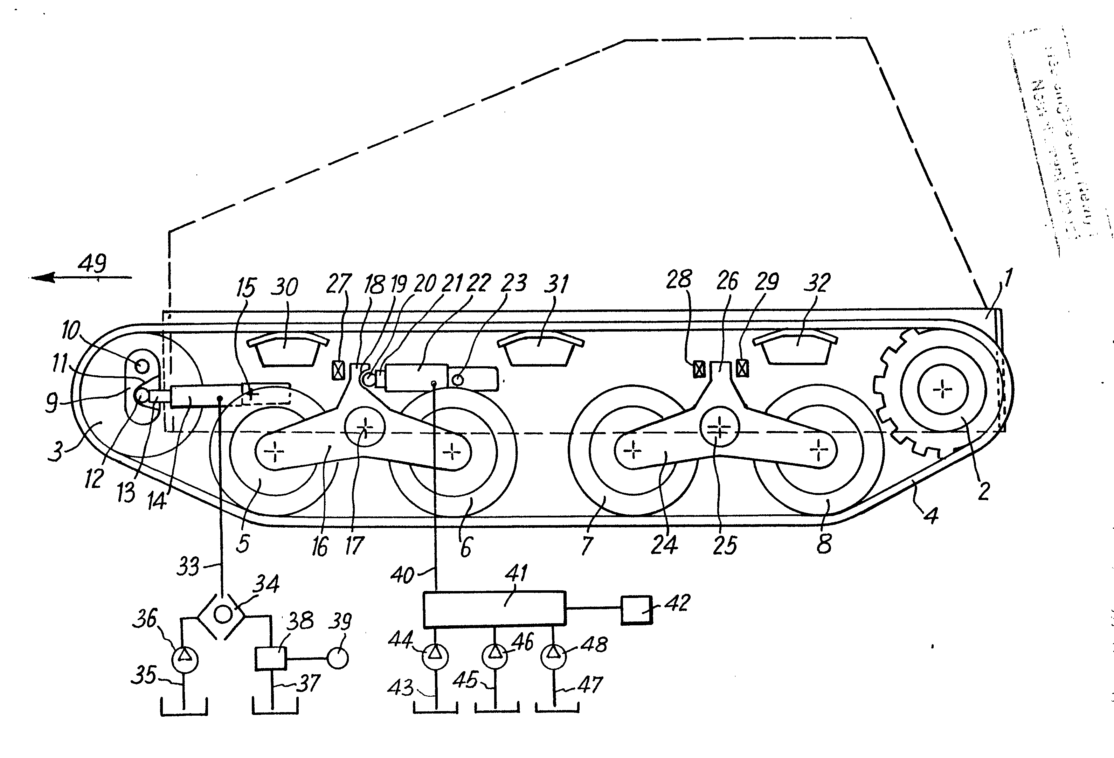

D'autres caractéristiques et avantages apparaîtront au cours de la description qui va suivre d'un exemple de réalisation de l'invention donné à titre indicatif et non limitatif, en relation avec la figure jointe sur laquelle est montré schématiquement, en vue longitudinale, un côté d'un train chenillé équipant un engin selon l'invention, accompagné de deux schémas hydrauliques s'appliquant audit train chenillé.

Un châssis 1 porte un barbotin d'entraînement 2, une poulie de tension 3, une chenille 4 et quatre roues de guidage 5, 6, 7 et 8.

Le barbotin 2 est monté directement sur le châssis 1 tandis que la poulie de tension 3 est montée sur une pièce pendulaire 9 oscillant librement autour d'un axe 10 fixe par rapport au châssis 1.

Cette pièce 9 porte une surépaisseur présentant une encoche 11 au fond de laquelle vient s'appuyer la tête 12 de la tige 13 d'un vérin 14 dont le corps est articulé sur un axe 15 fixe par rapport au châssis 1.

Les deux roues de guidage 5 et 6 sont montées sur un balancier 16 oscillant autour d'un axe 17, la distance de l'axe de rotation de la roue 5 à l'axe 17 étant plus grande que la distance de l'axe de rotation de la roue 6 audit axe 17.

Le balancier 16 porte un bras 18 avec un encoche 19 au fond de laquelle vient s'appuyer la tête 20 de la tige 21 d'un second vérin 22 dont le corps est articulié sur un axe 23 également fixe par rapport au châssis 1.

Les deux roues de guidage 7 et 8 sont montées sur un blancier 24 oscillant autour d'un axe 25 et portant un bras 26. La distance de l'axe de rotation de la roue 8 à l'axe 25 est plus grande que la distance de l'axe de rotation de la roue 7 audit axe 25.

Sur le châssis 1, sont fixées trois butées 27, 28 et 29, et trois glissières 30, 31 et 32.

Le schéma hydraulique d'alimentation du vérin 14 comprend une canalisation 33 reliée à un sélecteur 34 desservi, d'une part, par un circuit à basse pression constante comportant une canalisation 35 et une pompe 36 et d'autre part, par un circuit à pression variable comportant une canalisation 37 et une pompe 38 commandée par un détecteur 39 mesurant les efforts transmis par la chenille.

Le schéma hydraulique d'alimentation du vérin 22 comprend une canalisation 40 reliée à un électro-distributeur à tiroir 41 à trois positions commandé par un inclinomètre 42 et relié à un circuit basse pression comportant une canalisation 43 et une pompe 44, à un circuit moyenne pression comprotant une canalisation 45 et une pompe 46 et à un circuit haute pression comportant une canalisation 47 et une pompe 48.

Dans ces conditions, le fonctionnement s'établit comme décrit ci-après.

Sur terrain plat et en marche avant (flèche 49), les deux vérins 14 et 22 sont en basse pression, le vérin 14 étant alimenté à partir de la canalisation 35 à travers le sélecteur 34 et la canalisation 33, tandis que le vérin 22 est alimenté à partir de la canalisation 43 à travers l'électro-distributeur 41 et la canalisation 40.

La différence de bras de levier entre l'axe de rotation de la roue 5 et l'axe du balancier 16 et entre l'axe de rotation de la roue 6 et le même axe 16 fait que la pression de la masse de l'engin est plus élevée sur l'axe de la roue 6 que sur celui de la roue 5.

Cette différence de pression, partiellement compensée par la pression excercée par la tête 20 de la tige 21 du vérin 22 permet précisément de maintenir toujours au contact ladite tête 20 avec le fond de l'encoche 19 sur le bras 18 du balancier 16, non seulement sans créer de surpression au sol au droit de la roue 5 par rapport à la roue 6, mais en maintenant une légère sous-pression. Ce contact permanent assure une coopération sans à-coups entre les deux pièces, alors qu'il n'y a pas articulation mécanique entre elles.

La légère sous-pession au droit de la roue 5 par rapport à la pression au droit de la roue 6 est avantageuse, tant en marche normale que lors de la rotation de l'engin sur lui-même.

En marche normale, le contact des chenilles avec le sol est progressif ce qui assure également une prise au sol progressive, donc moins offensante, et, lors de la rotation de l'engin, cette prise progressive diminue le grattage du sol dans la zone périphérique balayée par les chenilles.

Si un obstacle se présente devant la roue de guidage 5, celle-ci se trouve soulevée, ce qui tend à provoquer un déplacement angulaire du balancier 16 et donc du bras 18 qui exerce une certaine pression sur la tête 20 de la tige de piston 21 du vérin 22. Mais ce déplacement éventuel est contrarié de plus en plus par la pression existant dans la canalisation 40.

Si l'obstacle atteint une certaine hauteur, le déplacement angulaire du balancier est limité par la course de la tige de piston 21 dans le vérin 22 et le soulèvement de la roue 5 est donc également limité, à la fois pour maintenir au sol une surface minimum de la chenille et pour assurer la tension correcte de celle-ci sans déplacement excessif de la poulie de tension 3. C'est pourquoi, à partir d'une certaine valeur de soulèvement, c'est tout l'engin qui va éventuellement s'incliner.

Lorsque l'obstacle a été franchi par la roue 5, il se présente devant la roue 6 qui va être soulevée de la même valeur que la première. Il n'est pas nécessaire d'avoir un dispositif spécial d'amortissement de ce soulèvement, car il y a amortissement provoqué par la pression de l'engin exercée sur la roue 5, pression qui contrarie le déplacement angulaire du balancier 16 provoqué par le soulèvement de la roue 6. La butée 27 limite le déplacement angulaire du balancier 16.

L'obstacle se présente ensuite devant la roue 7 dont le soulèvement est contrarié par la pression de l'engin sur la roue 8 et limité par la butée 28.

Quant à la roue 8, il n'est pas prévu de dispositif spécial d'amortissement de son soulèvement, cet amortissement étant obtenu par la tension exercée par le barbotin 2 sur le brin de chenille entre lui et la roue 8, la butée 29 assurant la limitation de ce soulèvement.

Il est bien évident que l'engin est équipé de l'autre côté, d'une autre chenille identique et entraînée de la même manière, chacune des deux chenilles se comportant indépendamment de l'autre.

Pendant ce franchissement d'obstacles, la tension de la chenille n'a pas changé, le vérin 14 restant toujours alimenté par la canalisation basse pression 35.

Imaginons maintenant que l'engin doive franchir le même obstacle que précédemment, mais en marche arrière. Les problèmes à résoudre sont tout différents.

Tout d'abord, la traction de la chenille 4 par le barbotin 2 ne s'exerce plus par le brin inférieur de la chenille, mais par son brin supérieur, c'est-à-dire par celui qui repose sur les guides 30, 31 et 32. Ce brin supérieur se trouve alors tendu alors que le brin inférieur devient le brin mou, ce qui risque de provoquer un déchenillage. Pour éviter ce risque, l'enclenchement de la marche arrière a inversé la position du sélecteur 34 qui alimente alors la canalisation 33 à partir de la canalisation 37 et de la pompe 38, le débit de celle-ci étant fonction des indications fournies par le détecteur 39 de manière à tendre de plus en plus la chenille lorsque les efforts développés par celle-ci augmentent, et à diminuer cette tension lorsque lesdits efforts diminuent.

En ce qui concerne le vérin 22 et les roues de guidage 5 à 8, rien n'est changé à leur fonctionnement. Lors du passage de la roue 8 sur l'obstacle, son soulèvement ne nécessite pas d'amortissement particulier du fait de la proximité du barbotin 2 sur lequel la chenille est engrenée et comme au passage de l'obstacle en marche avant, ce soulèvement est limité par la butée fixe 28.

Le passage des roues 7, 6 et 5 sur l'obstacle s'effectue comme en marche avant, c'est-à-dire avec amortissement du soulèvement de la roue 7 par la pression de l'engin sur la roue 8, amortissement du soulèvement de la roue 6 par la pression de l'engin sur la roue 5 et amortissement du soulèvement de la roue 5 par le vérin 22.

L'enclenchement de la marche avant remet le vérin 14 en communication avec la canalisation 35 basse pression constante.

Imaginons maintenant que l'engin avance sur un déclivité. Là encore les conditions de fonctionnement vont changer, et d'autant plus que la pente sera plus accentuée. En effet, l'inclinaison de l'engin déplace vers les roues de guidage 5 et 6 la verticale du centre de gravité sur le polygone de sustentation. L'équilibre de l'engin s'en trouve modifié, notamment par la surcharge que reçoivent les roues 5 et 6.

Pour compenser les effets de ce déséquilibre, l'engin est muni de l'inclinomètre 42 qui mesure de façon constante la position de l'engin par rapport à la verticale et qui agit sur l'électro-distributeur 41 en fonction de l'inclinaison qu'il détecte.

Lorsque l'inclinaison atteint 10°, l'électro-distributeur 41 met la canalisation 40 qui dessert le vérin 22 en communication avec le circuit moyenne pression 45 : cette élévation de la pression dans le vérin 22 va compenser la surcharge que reçoit la roue 5 par rapport à la roue 6 du fait de l'inclinaison de l'engin, et participer à la tension de la chenille 3 en lui conservant son profil normal.

Lorsque l'inclinaison dépasse 15°, l'électro-distributeur 41 met la canalisation 40 en communication avec le circuit haute pression 47 dont la valeur permet de maintenir le balancier dans un position en deçà de la position de fin de course de la tige 20, malgré la pression exercée par la surcharge due à l'inclinaison de l'engin.

Ces augmentations de pression dans le vérin 22 jusqu'au quasi-blocage du balancier présentent un autre avantage qui est d'augmenter la stabilité de l'engin.

En effet, le point de basculement normal de l'engin est atteint lorsque la verticale du centre de gravité de l'engin passe par l'axe 17 du balancier 16. Mais lorsque celui-ci est maintenu par les effets de la haute pression, à l'encontre de ceux de la masse de l'engin, le point de basculement ne sera atteint que lorsque la verticale du centre de gravité de l'engin passera par l'axe de la roue 5. Ainsi la stabilité de l'engin s'en trouve-t-elle augmentée par rapport à un engin ne possédant pas de dispositif susceptible de s'opposer à l'oscillation du balancier 16.

Si, alors que l'engin a avancé sur un déclivité, on veut remonter la même pente en marche arrière, l'enclenchement de cette dernière va faire passer, comme expliqué plus haut, le vérin de tension 14 en haute pression, mais cela ne changera rien au régime du vérin 22 qui reste en haute pression tant que l'inclinomètre n'aura pas détecté la diminution, puis la disparition de l'inclinaison de l'engin.

Lorsque l'engin avance en montée, il n'y a pas à prendre de précaution spéciale puisque la pression exercée par l'engin sur les roues 5 et 6 ne fait qu'augmenter l'adhérence de la chenille sur le sol à leur niveau et favorise le déplacement de l'engin. Par ailleurs, le vérin 22 joue son rôle plus facilement que si l'engin était sur un plan horizontal puisque les roues 5 et 6 subissent une pression moindre.

Si l'on fait ensuite descendre l'engin en marche arrière, les problèmes sont les mêmes que pour la montée en marche avant et le vérin 22 peut donc rester en basse pression. Seul, le vérin 14 va se mettre en haute pression pour faire face aux problèmes inhérents à la marche arrière expliqués plus haut.

Il est entendu que l'on peut, sans sortir de l'invention, modifier des détails de conception et/ou de construction en vue d'obtenir un même résultat.

Par exemple, en cas d'entrainement hydraulique des chenilles, on pourrait lier le fonctionnement de la pompe 38 au circuit hydraulique d'entraînement des chenilles et supprimer alors le détecteur 39.

On pourrait aussi équiper le balancier 24 d'un dispositif anti-oscillation identique ou analogue à celui du balancier 16, par exemple si un outil de travail devait être monté sur l'engin côté barbotin 2.

## Revendications

1. Engin automoteur à chenilles souples maintenues en position par des roues de guidage (5-8), caractérisé en ce que les deux roues de guidage de chaque extrémité sont montées sur un balancier (16,24) dont l'axe d'oscillation (17,25) est différent des axes de rotation des roues qu'il porte et qu'au moins l'un de ces deux balanciers est muni d'un dispositif (18-23) susceptible de s'opposer à son mouvement d'oscillation.

2. Engin chenillé selon la revendication 1, caractérisé en ce que le dispositif susceptible de s'opposer au mouvement d'oscillation d'au moins un balancier est commandé par un inclinomètre (42) mesurant l'inclinaison de l'engin par rapport à la verticale.

3. Engin chenillé selon la revendication 2, caractérisé en ce que le dispositif susceptible de s'opposer à l'oscillation d'au moins un balancier agit de plus en plus sur celui-ci au fur et à mesure que l'inclinaison de l'engin augmente.

4. Engin chenillé selon l'une des revendications précédentes, caractérisé en ce que le débattement angulaire des balanciers est limité.

5. Engin chenillé selon l'une des revendications précédentes, caractérisé en ce que, sur les balanciers d'extrémité, la distance de l'axe de rotation de la roue extérieure de guidage à l'axe d'oscillation du balancier sur lequel elle est montée est plus grande que la distance de l'axe de rotation de la roue intérieure audit axe d'oscillation.

6. Engin chenillé selon l'une des revendications précédentes, caractérisé en ce qu'il comporte des moyens pour assurer au moins deux tensions différentes à chacune des chenilles.

7. Engin chenillé selon la revendication 6, caractérisé en ce que la mise en tension faible des chenilles est liée de façon automatique à l'enclenchement de la marche avant sur l'engin et que leur mise en tension forte est liée de façon automatique à l'enclenchement de la marche arrière.

8. Engin chenillé selon la revendication 7, caractérisé en ce qu'il est muni de moyens (39) augmentant la tension des chenilles en fonction des efforts qu'elles développent lorsque l'engin est en marche arrière.

49

15 30 27 18 19 20 21 22 23 31 28 26 29 32 1

10
11
9
3
12 13 14
5 16 17 6 7 24 25 8
4 2

33
34
36 38 39
35 37
44 46 48
40 41 42
43 45 47

EP 0 362 062 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 065 592  (ROLAND et al.)<br>* Figure 5; résumé; pages 1-3; revendication 1 *<br>--- | 1 | B 62 D  55/30<br>B 62 D  55/116<br>B 62 D  49/08 |
| Y | FR-A-2 502 573  (KÄSSBOHRER)<br>* Figures 2,3; revendications * | 1 | |
| A | | 2,3,6 | |
| | --- | | |
| A | DE-A-1 555 539  (GO-TRACT)<br>* Pages 1,2 *<br>--- | 7,8 | |
| A | US-A-3 375 944  (BEXTEN)<br>* Figure 4 *<br>----- | 1 | |

| | DOMAINES TECHNIQUES RECHERCHES (Int. Cl.5) |
|---|---|
| | B 62 D |

Le présent rapport a été établi pour toutes les revendications

| Lieu de la recherche | Date d'achèvement de la recherche | Examinateur |
|---|---|---|
| LA HAYE | 20-12-1989 | SCHMAL R. |